# EUROPEAN PATENT SPECIFICATION

(11) **EP 0 932 902 B1**
(45) Date of publication and mention of the grant of the patent: **18.02.2004**
(21) Application number: 98910953.3
(22) Date of filing: 16.04.1998
(51) Int. Cl.: G11B 23/40

(54) **HOUSING FOR DISC-SHAPED INFORMATION CARRIER**
BEHÄLTER FÜR SCHEIBENFÖRMIGEN INFORMATIONSTRÄGER
BOITIER POUR SUPPORT D'INFORMATION EN FORME DE DISQUE

(30) Priority: 10.06.1997 EP 97201747
(43) Date of publication of application: 04.08.1999
(73) Proprietor: Koninklijke Philips Electronics N.V., 5621 BA Eindhoven (NL)
(72) Inventor: DOODSON, Peter, John, NL-5656 AA Eindhoven (NL)
(74) Representative: Schrijnemaekers, Hubert Joannes Maria
(86) International application number: PCT/IB1998/000570
(87) International publication number: WO 1998/057326

(56) References cited:
- EP-A- 0 768 663
- DE-A- 3 425 579

## Description

The invention relates to a housing for holding a disc-shaped information carrier, which housing comprises a bottom section having a holding device for holding the information carrier, and further comprising a cover section which is hingeably connected to the bottom section at a back side of the housing, the bottom section comprising a bottom wall, a transparent front wall, which faces the back side of the housing, and two side walls, and an insert sheet being arranged on the bottom wall, which insert sheet has an upright portion which extends adjacent the front wall.

Such a housing is known from DE-A 34 25 579, US-A-5.244.085 or GB-A-2.222.143, which is used for the two-part form delimitation of claim 1. The housing is used for the storage of an optical information disc, particularly a Compact Disc. The known housing comprises a bottom section having a central clamping device for clamping the optical disc and further comprises a cover section which is hingeably connected to the bottom section. The bottom section has raised side walls, of which one side wall forms an uninterrupted front wall and of which two opposite side walls have recesses for the removal of the information disc from housing. The bottom section generally contains an insert sheet with information, which insert sheet has a folded upright front portion, which faces the transparent raised front wall. The front portion can accommodate readable data about the information stored digitally in the information disc. A drawback of the known housing is that it has only limited possibilities to accommodate externally readable information.

It is an object of the invention to modify the housing of the type defined in the opening paragraph in such a manner that the possibilities of accommodating externally readable information in the housing are extended considerably.

To this end, the housing in accordance with the invention is characterized in that the side walls are substantially uninterrupted and transparent and the insert sheet has upright portions which extend adjacent the side walls and can accomodate readable information.
As a result of these measures the housing in accordance with the invention can accommodate readable information about the information disc on at least three side faces of the housing, which are formed by the front wall and the two side walls of the bottom section. This provides great freedom in the design of storage devices, such as storage racks, for housings of information discs because in such devices the housing in accordance with the invention can occupy various positions in which the relevant information is readable for a user. A further advantage is that when the housing lies flat on a table or shelf the information at the side faces is perceptible from different directions or at different angles, so that a user is informed at a glance about the content of the housing. Furthermore, the housing in accordance with the invention provides additional creative opportunity for artwork designers.

A preferred embodiment of the housing in accordance with the invention is characterized in that the bottom section comprises a transparent rear wall facing the front wall, the insert sheet comprising an upright portion which extends adjacent the rear wall. In this embodiment optimum use is made of the possibility of displaying information at the side faces of the housing.

Preferably, all the upright portions of the insert sheet have been provided with printed information.

A preferred embodiment of the housing in accordance with the invention has the characteristic features defined in Claim 4. Preferably, the construction of the cover section is such that the rear wall is also substantially uninterrupted and has a height corresponding to the height of the front wall and the side walls.

The invention will now be described in more detail, by way of example, with reference to the drawings, in which
Figure 1 is an exploded view of an embodiment of the housing in accordance with the invention, and
Figure 2 is a perspective view showing the embodiment of Figure 1 in a closed condition.

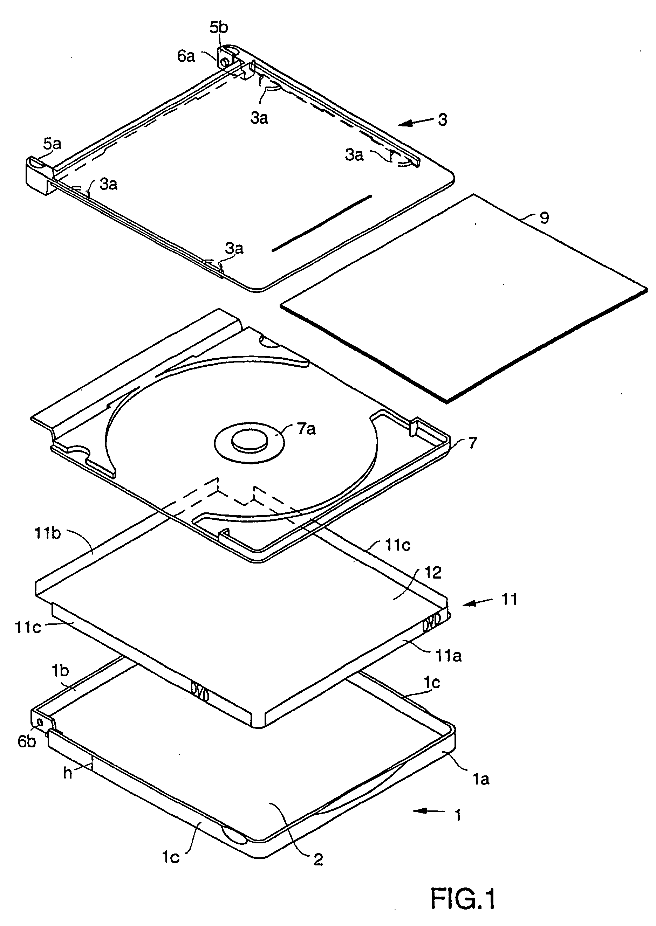

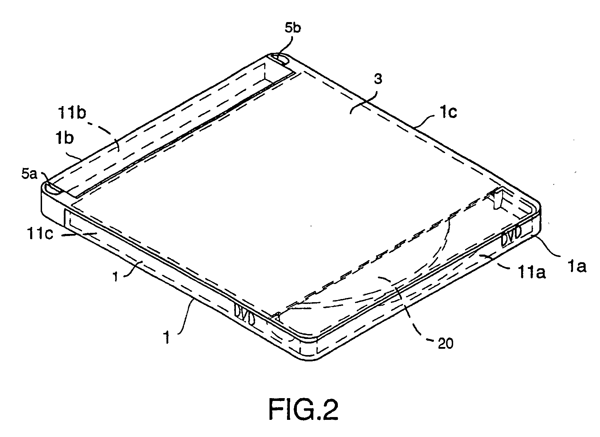

The housing in accordance with the invention shown in Figures 1 and 2 is suitable for the storage of an optical information carrier 20, in the present example a DVD. Such an information carrier has one or more optically inscribable and/or readable information layers and has a center hole. The housing, which has two parts, comprises a bottom section 1 and a cover section 3, which are hingeably connected to one another by corner hinges 5a and 5b. The bottom section 1 comprises a holding device 7, in the present example in the form of an insert tray, having a central clamping unit 7a for clamping the information carrier in position, the central clamping unit 7a engaging the center hole of the information carrier in the clamped condition.

The bottom section 1 is box-shaped and open at one side and it comprises a bottom wall 2, a front wall 1a and a rear wall 1b, which are upright with respect to the bottom wall 2, and two side walls 1c, which are upright with respect to the bottom wall 2. The front wall 2a, the rear wall 1b and the side walls 1c, all having the same height h, are transparent and essentially uninterrupted. Therefore, the frontwall, the rear wall and the side walls have mutually the same height. In the present example the bottom wall 2 is also transparent. The rear wall 1b forms the back side of the housing, near which back side the hinges 5a and 5b are disposed. In the present example the hinges 5a and 5b comprise trunnions 6a, which form part of the cover section 3 and which engage openings 6b of the bottom section 1. The cover section 3 itself is substantially plate-shaped, is transparent, and in the present example it comprises lugs 3a for retaining an inserted information booklet or folder 9. In the present example, the housing has external dimensions corresponding to the generally known CD jewel box, the cover section 3 as well as the bottom section 5 in the present example having rounded corners.

The housing in accordance with the invention has been provided with an insert sheet 11, which is situated in the bottom section 1, i.e. on the bottom wall 2. In the present example the insert sheet 11 comprises four upright portions, i.e. a portion 11a which extends adjacent the front wall 1a, a portion 11b which extends adjacent the rear wall 1b, and two portions 11c which extend adjacent the side walls 1c. Those sides of the upright portions 11a, 11b and 11c which face the transparent walls 1a, 1b and 1c have been provided with printed information relating to the information carrier 20 associated with the housing. The upright portions 11a, 11b and 11c are preferably integral with a main portion 12 of the insert sheet 11 and have been folded with respect thereto about folding lines. The insert sheet 11 can be made of paper, a plastic or any other suitable material.

As is apparent from the drawings, the insert sheet 11 is wholly situated inside the bottom section 1, the main portion 12 in the present example extending between bottom wall 2 and the holding device 7.

It is to be noted that the invention is not limited to the embodiment disclosed herein. For example, the hinges, the holding device, and other elements which are less relevant to the invention can be constructed in a different manner.

Moreover, the housing can be adapted specifically to different types of disc-shaped information carriers.

## Claims

1. A housing for holding a disc-shaped information carrier, which housing comprises a bottom section (1) having a holding device (7) for holding the information carrier, and a cover section (3) which is hingeably connected to the bottom section at a back side of the housing, the bottom section comprising a bottom wall (2), a transparent front wall (1a), which faces the back side of the housing, and two transparent side walls (1c), and an insert sheet (11) is situated in the bottom section (1) and arranged on the bottom wall (2), which insert sheet has an upright front portion (11a), which extends adjacent the front wall, **characterized in that** said insert sheet (11) has two upright side portions (11c), which extend adjacent the side walls and can accommodate readable information, and said side walls are substantially uninterrupted walls.

2. A housing as claimed in Claim 1, **characterized in that** the bottom section (1) comprises a transparent rear wall (1b) facing the front wall (1a), the insert sheet (11) comprising an upright rear portion (11b) which extends adjacent the rear wall.

3. A housing as claimed in Claim 1, **characterized in that** all the upright portions of the insert sheet (11) are provided with printed information.

4. A housing as claimed in Claim 1, **characterized in that** the front wall (1a) and the side walls (1c) of the bottom section (1) have at least substantially the same height with respect to the bottom wall (2).

## Patentansprüche

1. Gehäuse zum Aufnehmen eines plattenförmigen Informationsträgers, wobei dieses Gehäuse mit einem Bodenteil (1) mit einer Halterung (7) zum Haltern des Informationsträgers und weiterhin mit einem auf der Rückseite des Gehäuses gelenkig mit dem Bodenteil verbundenen Deckelteil (3) versehen ist, wobei der Bodenteil eine Bodenwand (2), eine gegenüber der Rückseite des Gehäuses liegende transparente Vorderwand (1a) und zwei Seitenwände (1c) aufweist und wobei in dem Bodenteil (1) und auf der Bodenwand (2) ein Infoblatt (11) mit einem sich gegenüber der Vorderwand erstreckenden aufrechtstehenden Teil (11a) vorgesehen ist, **dadurch gekennzeichnet, daß** das Infoblatt (11) zwei aufrecht stehende Seitenteile (11c) aufweist, die sich grenzend an die Seitenwände erstrecken und leserliche Information enthalten kann, und die genannten Seitenwände im Wesentlichen ununterbrochene Wände sind.

2. Gehäuse nach Anspruch 1, **dadurch gekennzeichnet, dass** der Bodenteil (1) eine transparente Rückwand (1b) hat, die der Vorderwand (1a) zugewandt ist, wobei das Infoblatt (11) einen aufrecht stehenden hinteren Teil (11b) aufweist, der sich grenzend an die Rückwand erstreckt.

3. Gehäuse nach Anspruch 1, **dadurch gekennzeichnet, dass** die aufrecht stehenden Teile des Infoblatts (11) mit Gedrucktem versehen ist.

4. Gehäuse nach Anspruch 1, **dadurch gekennzeichnet, dass** die Vorderwand (1a) und die Seitenwände (1c) des Bodenteils (1) gegenüber der Bodenwand (2) wenigstens im Wesentlichen die gleiche Höhe haben.

## Revendications

1. Boîtier pour retenir un support d'information en forme de disque, lequel boîtier comprend une partie inférieure (1) ayant un dispositif de retenue (7) pour retenir le support d'information et une partie de couvercle (3) qui est reliée par articulation à la partie inférieure d'un côté arrière du boîtier, la partie inférieure comprenant une paroi inférieure (2), une paroi avant transparente (1a), qui se situe vis-à-vis du côté arrière du boîtier, et deux parois latérales (1c), et une feuille d'insertion (11) se situe dans la partie inférieure (1) et est disposée sur la paroi inférieure (2), laquelle feuille d'insertion présente une partie verticale (11a) qui s'étend d'une manière adjacente à la paroi avant, **caractérisé en ce que** ladite feuille d'insertion (11) présente deux parties latérales verticales (11c) qui s'étendent d'une manière adjacente aux parois latérales et qui peuvent recevoir de l'information lisible, et lesdites parois latérales sont des parois sensiblement non interrompues.

2. Boîtier selon la revendication 1, **caractérisé en ce que** la partie inférieure (1) comprend une paroi arrière transparente (1b) qui se situe vis-à-vis de la paroi avant (1 a), la feuille d'insertion (11) comprenant une partie arrière verticale (11b) qui s'étend d'une manière adjacente à la paroi arrière.

3. Boîtier selon la revendication 1, **caractérisé en ce que** toutes les parties verticales de la feuille d'insertion (11) sont pourvues d'information imprimée.

4. Boîtier selon la revendication 1, **caractérisé en ce que** la paroi avant (1a) et les parois latérales (1c) de la partie inférieure (1) présentent au moins sensiblement la même hauteur par rapport à la paroi inférieure (2).
